# EUROPÄISCHE PATENTANMELDUNG

(11) **EP 4 678 880 A1**
(43) Veröffentlichungstag der Anmeldung: **14.01.2026**
(21) Anmeldenummer: 25188085.2
(22) Anmeldetag: 08.07.2025
(51) Int. Cl.: F01M 1/08, F16H 57/04, F16N 7/32

(54) **ÖLBENETZUNGSVORRICHTUNG ZUR SCHMIERUNG VON KRAFTFAHRZEUGKOMPONENTEN, SCHMIERUNGSVORRICHTUNG FÜR GETRIEBEKOMPONENTEN UND GETRIEBEKOMPONENTE EINES FAHRZEUGS**

(30) Priorität: 09.07.2024 DE 202024103798 U
(71) Anmelder: POLYTEC PLASTICS Germany GmbH & Co. KG, 49393 Lohne (DE)
(72) Erfinder: JONITZ, Andreas, 49393 Lohne (DE)
(74) Vertreter: dompatent

(57) **Zusammenfassung**

Ölbenetzungsvorrichtung zur Schmierung von Kraftfahrzeugkomponenten, aufweisend eine Ölzuführleitung mit einem Einlassende zur Ölzufuhr, sowie eine Oszillatoreinrichtung zur Ausbringung eines oszillierenden Ölstrahls; wobei die Oszillatoreinrichtung eine Oszillationskammer mit einer Treibdüse und mit einer relativ zu der Treibdüse stromabwärts gelegenen Ausbringdüse ausgebildet ist; wobei die Treibdüse dazu ausgebildet ist, das über die Ölzuführleitung zugeführte Öl als Treibstrahl in die Oszillationskammer abzugeben, wobei in der Oszillationskammer geometrische Strukturen zur Ausbildung von Wirbeln ausgebildet sind, wodurch der flüssige Treibstrahl bei Durchströmung der Oszillationskammer in einer Ebene in Oszillation versetzt wird; und wobei die Ausbringdüse zum Ausgeben des in der Ebene oszillierenden Ölstrahls aus der Oszillationskammer ausgebildet ist.

## Beschreibung

Die vorliegende Erfindung betrifft gemäß einem ersten Aspekt eine Ölbenetzungsvorrichtung zur Schmierung von Kraftfahrzeugen, gemäß einem zweiten Aspekt eine Schmierungsvorrichtung für Getriebekomponenten sowie gemäß einem dritten Aspekt eine Getriebekomponente eines Fahrzeugs.

Im Bereich der Kraftfahrzeugkomponenten bzw. insbesondere im Bereich von Getriebekomponenten ist es für den möglichst reibungsarmen Betrieb notwendig, eine flächendeckende Schmierung und Kühlung durch Ausbringung eines entsprechenden Schmiermittels, wie beispielsweise eines Getriebeöls, vorzunehmen. Aus dem Stand der Technik ist es dabei zunächst bekannt, beispielsweise Getriebezahnräder mittels punktförmiger Düsen, welche einen punktförmigen Strahl des Schmiermittels bzw. des Öls erzeugen, zu kühlen und zu schmieren. Bei den punktförmigen Düsen ist es für die ausreichende Schmierung und Kühlung der Getriebezahnräder erforderlich, eine Mehrzahl entsprechender Düsen vorzusehen, um in den verschiedenen Bereichen des Getriebes eine ausreichende Schmierung und Kühlung zu erreichen und über die unterschiedlichen Betriebszustände des Kraftfahrzeuges sicherzustellen.

Weiterhin sind aus dem Stand der Technik auch Vorrichtungen bekannt geworden, womit ein flächiger Ölfilm beispielsweise auf Getriebekomponenten aufgebracht werden kann, welche zur Erzeugung des flächigen Ölfilms eine Fächerdüse bzw. eine Schlitzdüse oder eine Punktdüse mit entsprechenden Leitrippen zur Erzeugung eines flächigen Ölfilms ausbilden. Die vorbezeichneten Vorrichtungen zur Erzeugung eines flächigen Ölfilms weisen allesamt den Nachteil auf, dass diese einen hohen Betriebsdruck des Schmiermittels bzw. des Öls erfordern, um eine ausreichende flächige Ausbringung über die entsprechenden Düsen zu erzeugen. Dies ist nachteilig, da insbesondere im Bereich der elektrisch angetriebenen Fahrzeuge, wie beispielsweise Elektroautomobile, der hohe Betriebsdruck einhergeht mit dem Erfordernis eines hohen Energieeinsatzes der Schmiermittel fördernden Pumpe. Weiterhin weisen die vorbezeichneten Vorrichtungen zur Ausbringung des flächigen Schmiermittelfilms den Nachteil auf, dass diese bei einer erhöhten Viskosität des Schmiermittels, beispielsweise wenn dieses im nicht angewärmten Zustand, wie beispielsweise im Winter, vorliegt, über die entsprechenden Düsen aufgrund der erhöhten Viskosität des Schmiermittels kein flächiger Ölfilm ausgebracht werden kann. Es besteht somit die Gefahr, dass bei niedrigeren Temperaturen des Schmiermittels, beispielsweise bei einem Kaltstart des Fahrzeugs unter Winterbedingungen, eine ausreichende Schmiermittelversorgung der Kraftfahrzeug- bzw. Getriebekomponenten nicht erzielt werden kann, was zu einem erhöhten Verschleiß und zu einer verringerten Lebensdauer der Getriebekomponenten führen kann.

Ausgehend von den vorbezeichneten Nachteilen des Standes der Technik stellt sich die vorliegende Erfindung die Aufgabe, eine Vorrichtung zur Schmierung von Kraftfahrzeugkomponenten, wie insbesondere von Getriebekomponenten, bereitzustellen, über welche auch unter geringen Betriebsdrücken des Schmiermittels eine flächige Ausbringung des Schmiermittels erzeugt werden kann und welche darüber hinaus auch bei niedrigsten Pumpendrücken zur Förderung des Schmiermittels und einer hohen vorliegenden Viskosität des Schmiermittels noch eine ausreichende Schmierung der Getriebekomponenten sicherstellen kann.

Erfindungsgemäß gelöst wird die vorbezeichnete Aufgabe gemäß einem ersten Aspekt der Erfindung durch eine Ölbenetzungsvorrichtung zur Schmierung von Kraftfahrzeugkomponenten, insbesondere zur Schmierung von Getriebekomponenten. Die erfindungsgemäße Ölbenetzungsvorrichtung weist dabei zunächst eine Ölzuführleitung mit einem Einlassende zur Ölzufuhr sowie eine Oszillatoreinrichtung zur Ausbringung eines oszillierenden Ölstrahls auf. Die Oszillatoreinrichtung umfasst dabei eine Oszillationskammer mit einer Treibdüse und mit einer relativ zu der Treibdüse stromabwärts gelegenen Ausbringdüse, wobei die Treibdüse dazu ausgebildet ist, das über die Ölzuführleitung zugeführte Öl als Treibstrahl in die Oszillationskammer abzugeben, wobei in der Oszillationskammer geometrische Strukturen zur Ausbildung von Wirbeln ausgebildet sind, wodurch der flüssige Treibstrahl bei Durchströmung der Oszillationskammer in einer Ebene in Oszillation versetzt wird und wobei die Ausbringdüse zum Ausgeben des in der Ebene oszillierenden Ölstrahls aus der Oszillationskammer ausgebildet ist.

Erfindungsgemäß wird unter dem Begriff des oszillierenden Ölstrahls, welcher aus der Ausbringdüse ausgegeben wird, ein nicht notwendigerweise kontinuierlicher Ölstrahl verstanden, der beispielsweise auch durchbrochen oder temporär auch als unmittelbar aufeinanderfolgende Tropfen ausgebildet ist. Unter dem Begriff des oszillierenden Ölstrahls ist erfindungsgemäß allerdings kein Ölnebel insbesondere kein zerstäubter Schmiermittelnebel zu verstehen. Unter dem verwendeten Begriff des Öls sind jegliche Schmiermittel zu verstehen, welche im Bereich der Kraftfahrzeugkomponenten, insbesondere im Bereich der Getriebekomponenten zur Schmierung und bevorzugt Temperierung der Komponenten Verwendung finden. Bevorzugt handelt es sich bei dem Öl um ein Getriebeöl.

Die erfindungsgemäße Ausbildung der Ölbenetzungsvorrichtung, insbesondere unter Verwendung einer Oszillationskammer, worin über geometrische Strukturen ein flüssiger Treibstrahl des Öls in Oszillation versetzt wird, weist den Vorteil auf, dass bereits bei sehr geringen vorliegenden Betriebsdrücken des Schmiermittels bzw. des Öls dieses innerhalb der Oszillationskammer in eine Oszillation versetzen werden kann, da es in der Oszillationskammer lediglich zu einem geringen Druckverlust kommt. Bei der erfindungsgemäßen Ausführung kann vorteilhaft auf sich bewegende Teil verzichtet werden. Weiterhin ermöglicht es die erfindungsgemäß Oszillatoreinrichtung bei Betriebsdrücken des Öls, welche unterhalb einer oszillierenden Anregung in der Oszillationskammer liegen, den in die Oszillationskammer eingebrachten flüssigen Treibstrahl auf geradem Wege durch die Oszillationskammer durchtreten zu lassen. Hierdurch wird es ermöglicht auch bei niedrigsten Ölbetriebsdrücken zumindest eine punktförmige Schmierung der entsprechenden Kraftfahrzeug- bzw. Getriebekomponenten erfindungsgemäß sicherzustellen.

Oszillatoreinrichtungen, umfassend eine Oszillationskammer zur Erzeugung von oszillierenden Fluidstrahlen, sind bereits aus dem Stand der Technik bekannt geworden, insbesondere sind bereits geometrische Strukturen innerhalb der entsprechenden Oszillationskammern zur Erzeugung von oszillierenden Fluidströmen bekannt geworden. Grundsätzlich weist, wie zuvor ausgeführt, die Oszillationskammer eine Treibdüse zum Einbringen eines flüssigen Treibstrahls des Schmiermittels bzw. Öls in die Oszillationskammer sowie eine Ausbringdüse auf, welche stromabwärts von der Treibdüse in der Oszillationskammer angeordnet ist. Die Oszillationskammer weist ein Paar von Kanälen mit Eingangsöffnungen zu den jeweiligen Seiten der Ausbringdüse und mit entsprechenden Ausgangsöffnungen in der Nähe der Treibdüse, wobei die Oszillationskammer ein Paar von Wandoberflächen aufweist, welche unmittelbar stromabwärts von den Ausgangsöffnungen beginnen und sich stromabwärts hiervon erstrecken, wobei das Paar der Wandoberflächen zwei Wirbel bildende Kammern begrenzt, deren stromaufwärtiges Ende jeweils in Bezug zu den Ausgangsöffnungen ausreichend zurückgesetzt ist, um eine Wandberührung des eingebrachten Öls zu vermeiden und dass das stromabwärtige Ende jeder Wandoberfläche jeweils Vorsprünge mit relativ glatten Oberflächen aufweist, um die in den Wirbel bildenden Kammern gebildeten Wirbel hierüber und in die Eingangsöffnung zu führen, wodurch der flüssige Treibstrahl veranlasst wird, in der Oszillationskammer in einer Ebene hin und her zu oszillieren. Der entsprechende oszillierende Ölstrahl wird dann über die Ausbringdüse aus der Oszillationskammer abgeführt bzw. ausgegeben und kann dann auf entsprechende zu schmierende Kraftfahrzeugkomponenten bzw. Getriebekomponenten flächig aufgebracht werden.

Die Treibdüse kann dabei insbesondere als Punktdüse zur Abgabe eines konzentrierten flüssigen Ölstrahls in die Oszillationskammer ausgebildet werden. Die Punktdüse kann dabei unterschiedliche geometrische Querschnitts- bzw. Düsenformen aufweisen, wie beispielsweise quadratisch, trapezförmig oder rund.

Wie bereits zuvor beschrieben, können als geometrische Strukturen in der Oszillationskammer zumindest zwei in der Oszillationskammer einander gegenüberliegende Steuerkanäle ausgebildet werden. Die gegenüberliegenden Steuerkanäle können dabei in einer ersten beispielhaften Ausführungsform spiegelsymmetrisch zu einer Mittelachse ausgebildet werden, wodurch es erzielt wird, dass ein in der Oszillationsebene in zwei Richtungen gleichmäßig oszillierender Strahl erzeugt wird. Anderenfalls kann es jedoch bevorzugt auch vorgesehen werden, die einander gegenüberliegenden Steuerkanäle asymmetrisch auszubilden bzw. die entsprechenden Steuerkanäle mit unterschiedlichen Durchflussquerschnitten vorzusehen, um eine ungleichmäßige Oszillation bzw. eine Oszillation in eine Hauptrichtung zu erzeugen.

Bevorzugt kann es vorgesehen werden, die Ausbringdüse in Form einer sich aufweitenden, wie beispielsweise einer fächerförmigen, Düse auszubilden, wobei die entsprechende Fächerdüse in der Oszillationsebene des Ölstrahls fächerförmig aufgeweitet ist. Es kann jedoch auch vorgesehen werden, die Ausbringdüse lediglich als Austrittsloch mit geeigneten Querschnittsabmessungen zur Ausbringung des oszillierenden Ölstrahls auszubilden.

Als Öl kann mit der erfindungsgemäßen Ölbenetzungsvorrichtung jegliches Schmiermittel verwendet werden, jedoch insbesondere ein Getriebeöl mit niedriger Viskosität Verwendung finden.

Entsprechend kann es vorgesehen werden, dass die Ölzuführleitung als auch die Oszillatoreinrichtung und deren jeweilige fluidführende Komponenten aus einem Getriebeöl beständigen und bevorzugt glasfaserverstärkten Kunststoffmaterial ausgebildet werden. Es können bevorzugt thermoplastische Kunststoffe zur Ausbildung der erfindungsgemäßen Vorrichtung und deren Komponenten genutzt werden.

Bevorzugt kann es vorgesehen werden, dass die Ölzuführleitung und die Oszillatoreinrichtung aus Polyamid 6 (Polycaprolactam) gefertigt werden, welches besonders bevorzugt glasfaserverstärkt ausgebildet wird. Dabei ist es wiederum bevorzugt vorgesehen, dass sowohl die Ölzuführleitung und die Oszillatoreinrichtung als Kunststoffspritzgussteile hergestellt werden können.

Die Ölzuführleitung kann ein dem Einlassende gegenüberliegendes Auslassende aufweisen, wobei im Bereich des Auslassendes die Oszillatoreinrichtung stoffschlüssig an der Ölzuführleitung angeformt ist und wobei die Treibdüse an dem Auslassende der Ölzuführleitung ausgebildet wird.

In einer alternativen Ausführungsform kann es vorgesehen werden, dass die Ölzuführleitung ein dem Einlassende gegenüberliegendes Auslassende aufweist, wobei im Bereich des Auslassendes die Oszillatoreinrichtung an die Ölzuführleitung fluiddicht ankoppelbar ausgebildet ist. Die fluiddichte Ankopplung der Oszillatoreinrichtung an dem Auslassende der Ölzuführleitung kann beispielsweise über aneinander angepasste Clip- oder Rastelemente ausgebildet werden, wodurch die Oszillatoreinrichtung vorteilhaft mit dem Auslassende der Ölzuführleitung verbindbar ist. Die Ankopplung ermöglicht es in vorteilhafter Weise, die Lage der Oszillationsebene der Ausbringdüse bzw. der Fächerdüse der Oszillatoreinrichtung relativ zu der Ölzuführleitung zu verändern. Damit wird es erfindungsgemäß ermöglicht, den oszillierenden Ölstrahl in einer gewünschten Ebene und damit spezifisch gerichtet auf zu benetzende Getriebekomponenten auszubilden. Die fluiddichte Ankopplung der Oszillatoreinrichtung an dem Auslassende erfolgt dabei bevorzugt werkzeuglos und reversibel.

Die Ölzuführleitung und die Oszillatoreinrichtung können wieder bevorzugt quer zu der Strömungsrichtung des Öls von dem Einlassende zu der Ausbringdüse als mindestens zweischaliges Spritzgussteil mit mindestens zwei Kunststoffschalenteilen ausgeführt werden.

Die mindestens zwei Kunststoffschalenteile sind über mindestens eine Fügeoberfläche fluiddicht miteinander verbunden bzw. stoffschlüssig miteinander verbunden zur Ausbildung einer geschlossenen Rohrstruktur im Bereich der Ölzuführleitung und einer fluiddichten Oszillationskammer.

Bevorzugt weist das mindestens zweischalige Kunststoffspritzgussteil mindestens eine ebene Fügeoberfläche auf.

Es kann vorgesehen werden, dass das mindestens eine erste Kunststoffschalenteil aus einem lasertransparenten Kunststoffmaterial und das mindestens eine zweite Kunststoffschalenteil aus einem laserabsorbierenden Kunststoffmaterial ausgebildet wird. Die vorbezeichnete Ausführungsform weist den Vorteil auf, dass die ersten und zweiten Kunststoffschalenteile mittels eines Laserschweißverfahrens miteinander fluiddicht verbunden bzw. gefügt werden können. Alternativ kann es aber auch vorgesehen werden, die ersten und zweiten Kunststoffschalenteile generell aus einem beliebigen Kunststoffmaterial auszubilden und die entsprechenden Kunststoffschalenteile mittels eines Montagespritzgussverfahrens zu fügen.

Die mindestens zwei Kunststoffschalen können stoffschlüssig miteinander verbunden, bevorzugt miteinander stoffschlüssig, gefügt werden. Es kann entsprechend auch vorgesehen werden, dass die mindestens zwei Kunststoffschalenteile miteinander verklebt werden.

Bevorzugt kann es vorgesehen werden, dass die Ölzuführleitung und die Oszillatoreinrichtung entlang der Strömungsrichtung des Öls von dem Einlassende zu der Ausbringdüse jeweils als einstückiges Kunststoffspritzgussteil ausgeführt sind.

Weiterhin kann es vorgesehen werden, dass im Bereich des Einlassendes der Ölzuführleitung ein Schnellkupplungsanschluss ausgebildet ist zur fluiddichten Ankopplung der erfindungsgemäßen Ölbenetzungsvorrichtung an ein ölführendes Bauteil.

Es kann weiterhin vorgesehen werden, dass im Bereich des Einlassendes und/oder, wenn vorhanden, des Auslassendes der Ölzuführleitung ein Dichtungselement angeordnet oder angeformt ist, bevorzugt ausgebildet ist zur fluiddichten Ankopplung der Ölzuführleitung.

Im Bereich der Ölzuführleitung und/oder der Oszillatoreinrichtung kann weiterhin mindestens ein Befestigungselement, bevorzugt eine Schraubhülse, zur lasttragenden Verbindung der erfindungsgemäßen Ölbenetzungsvorrichtung mit einer Kraftfahrzeugkomponente bzw. einer Getriebekomponente vorgesehen werden.

Die Schraubhülse dient dabei als Vorgabe eines Schraubpunkts zur Aufnahme der Schraublast in einem Bauteil.

Gemäß einem zweiten Aspekt betrifft die vorliegende Erfindung eine Schmierungsvorrichtung für Getriebekomponenten, bevorzugt eines elektrisch angetriebenen Fahrzeugs, wobei die Vorrichtung mindestens eine Getriebekomponente eines Fahrzeugs, mindestens ein ölführendes Bauteil sowie mindestens eine Ölbenetzungsvorrichtung gemäß dem ersten Aspekt der vorliegenden Erfindung umfasst, wobei das mindestens eine Einlassende der mindestens einen Ölbenetzungsvorrichtung mit dem mindestens einen ölführenden Bauteil verbunden ist zur Zufuhr von Öl in die mindestens eine Ölzuführleitung und wobei die mindestens eine Ausbringdüse in Richtung der mindestens einen Getriebekomponente ausgerichtet ist zur Ausbringung eines oszillierenden Ölstrahls auf die Getriebekomponente.

Gemäß einem dritten Aspekt betrifft die vorliegende Erfindung die Getriebekomponente eines Fahrzeugs, bevorzugt eines Elektrofahrzeugs, aufweisend mindestens ein ölführendes Bauteil sowie mindestens eine Ölbenetzungsvorrichtung gemäß dem ersten Aspekt der vorliegenden Erfindung, wobei das mindestens eine Einlassende der mindestens einen Ölbenetzungsvorrichtung mit dem mindestens einen ölführenden Bauteil verbunden ist zur Zuführung von Öl in die mindestens eine Ölzuführleitung und wobei die mindestens eine Ausbringdüse in Richtung der mindestens einen Getriebekomponente ausgerichtet ist zur Ausbringung eines oszillierenden Ölstrahls auf die Getriebekomponente.

Im nachfolgenden werden unter Bezugnahme auf die beigefügten Figuren beispielhafte Ausführungsformen der erfindungsgemäßen Vorrichtung ausgeführt.

Es zeigen:
- Fig. 1A: eine erste perspektivische schematische Ansicht der Vorderseite einer erfindungsgemäßen Ölbenetzungsvorrichtung;
- Fig. 1B: die beispielhafte Ausführungsform der Ölbenetzungsvorrichtung gemäß Fig. 1A in perspektivischer Ansicht von der Rückseite;
- Fig. 2A: eine zweite beispielhafte Ausführungsform einer ersten Halbschale einer erfindungsgemäßen Ölbenetzungsvorrichtung in Halbschalenbauweise;
- Fig. 2B: eine vergrößerte schematische Ansicht der erfindungsgemäßen Ausführungsform gemäß Fig. 2A im Bereich der Oszillationskammer;
- Fig. 2C: die beispielhafte Ausführungsform der erfindungsgemäßen Ölbenetzungsvorrichtung gemäß Fig. 2A mit aufgesetzter zweiter Halbschale, welche im vorderen Bereich partiell freigeschnitten ist;
- Fig. 3: die beispielhafte erfindungsgemäße Ausführungsform einer Ölbenetzungsvorrichtung gemäß Figuren 1A und 1B mit schematisch dargestelltem Ölstrahl; sowie
- Fig. 4: eine perspektivische Ansicht einer weiteren beispielhaften Ausführungsform einer erfindungsgemäßen Ölbenetzungsvorrichtung.

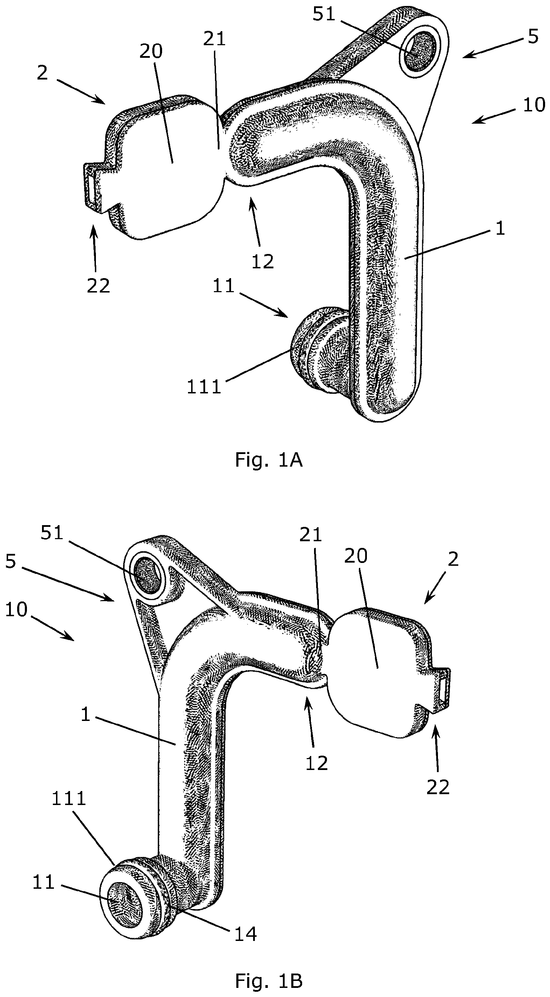

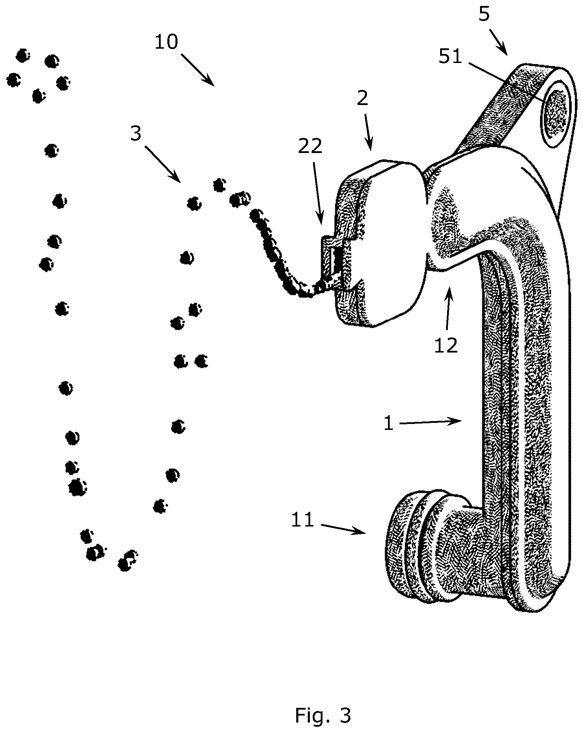

Die Fig. 1A zeigt in perspektivisch und schematischer Ansicht eine erste Vorderseitenansicht einer erfindungsgemäßen Ölbenetzungsvorrichtung 10, welche zur Schmierung von Kraftfahrzeugkomponenten durch Ausbringung eines oszillierenden Ölstrahls, insbesondere von Getriebekomponenten, vorgesehen ist. Die erfindungsgemäße Ölbenetzungsvorrichtung 10 weist eine Ölzuführleitung 1 mit einem Einlassende 11 zur Ölzufuhr sowie eine Oszillatoreinrichtung 2 zur Ausbringung eines oszillierenden Ölstrahls auf, wobei der Ölstrahl in der Fig. 1A nicht dargestellt ist, jedoch der Fig. 3 beispielhaft entnommen werden kann und das Bezugszeichen 3 trägt.

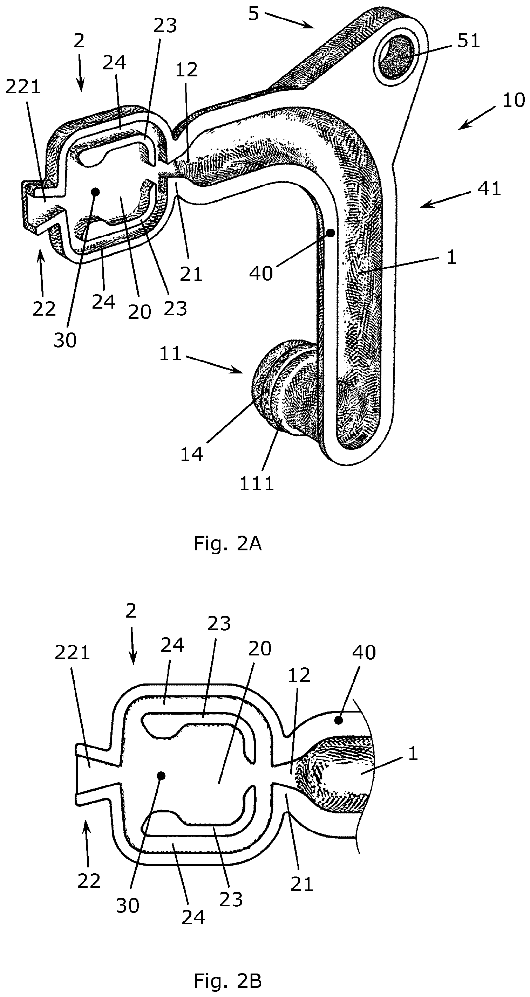

Die Oszillatoreinrichtung 2 weist eine Oszillationskammer 20 mit einer Treibdüse 21 und einer relativ zu der Treibdüse 21 stromabwärts gelegenen Ausbringdüse 22 auf. Die Treibdüse 21 ist dabei dazu ausgebildet, dass über die Ölzuführleitung 1 zugeführte Öl als Treibstrahl in die Oszillationskammer 20 abzugeben, wobei in der Oszillationskammer 20, so wie dies über die Fig. 2A entnehmbar ist, geometrische Strukturen 23 zur Ausbildung von Wirbeln innerhalb der Oszillationskammer 20 ausgebildet sind, wobei durch die Wirbel der flüssige Treibstrahl bei Durchströmung der Oszillationskammer 20 in einer Ebene 30 in Oszillation versetzt wird. Die Ausbringdüse 22 ist dabei derart ausgestaltet, dass diese zum Ausgeben des in der Ebene 30 oszillierenden Ölstrahls 3 aus der Oszillationskammer geeignet ist.

Die beispielhafte Ausführungsform der Ölbenetzungsvorrichtung gemäß Fig. 1 ist derart ausgeführt, dass die Ölzuführleitung 1 eine dem Einlassende 11 gegenüberliegendes Auslassende 12 aufweist, wobei im Bereich des Auslassendes 12 in der dargestellten Ausführungsform gemäß den Figuren 1 die Oszillatoreinrichtung 2 stoffschlüssig an der Ölzuführleitung 1 angeformt ist und wobei die Treibdüse 21 an dem Auslassende 12 der Ölzuführleitung ausgebildet ist, so wie dies auch genauer in der Fig. 2A nachvollziehbar ist.

Die beispielhafte Ausführungsform gemäß Fig. 1A und Fig. 1B weist weiterhin im Bereich des Einlassendes 11 der Ölzuführleitung 1 einen optionalen Schnellkupplungsanschluss 111 auf, der zur fluiddichten Ankopplung der Ölzuführleitung 1 an ein ölführendes Bauteil ausgebildet ist. Dabei ist im Bereich des Einlassendes 11 der Ölzuführleitung 1 ein Dichtungselement 14 angeordnet bzw. angeformt, worüber eine fluiddichte Ankopplung der erfindungsgemäßen Vorrichtung an einem ölzuführenden Bauteil, wie insbesondere einer Ölzuführleitung, erreicht werden kann.

Die Ausführungsform gemäß Figuren 1A und 1B weist weiterhin ein Befestigungselement 5 auf, welches in der dargestellten bevorzugten Ausführungsform eine Schraubhülse 51 zur lasttragenden Verbindung der Ölbenetzungsvorrichtung 10 mit einer Kraftfahrzeugkomponente bzw. mit einer lasttragenden Struktur eines Kraftfahrzeugs umfasst.

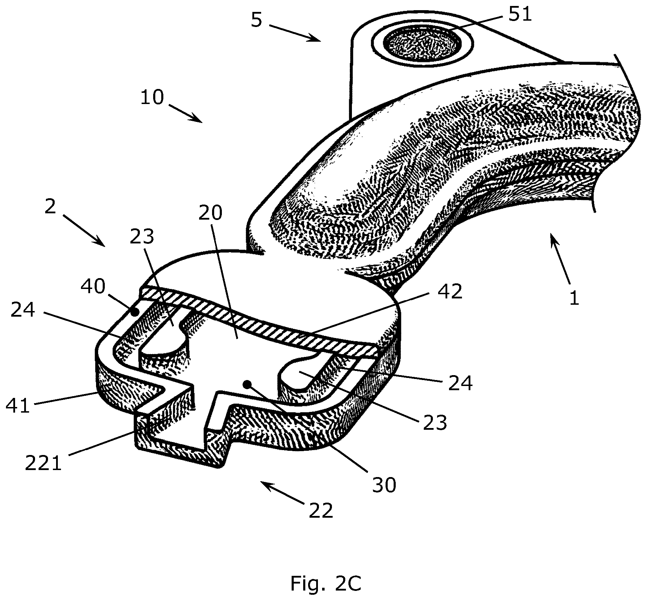

Die Fig. 2A zeigt die beispielhafte Ausführungsform gemäß den Figuren 1A und 1B, wobei die Ölbenetzungsvorrichtung 10 als zweischaliges Kunststoffbauteil ausgebildet ist und in der Fig. 2A lediglich ein erstes Kunststoffschalenteil 41 dargestellt ist, welches mit einem gegenüberliegenden zweiten Kunststoffschalenteil 42, so wie dies in der Fig. 2C gezeigt ist, über mindestens eine ebene Fügeoberfäche 40 gefügt bzw. fluiddicht verbunden werden kann. Die mindestens zwei Kunststoffschalenteile 41, 42 lassen sich dabei stoffschlüssig miteinander verbinden bzw. werden bevorzugt stoffschlüssig miteinander gefügt. Aus dem Stand der Technik sind entsprechende Fügeverfahren für Kunststoff, insbesondere für thermoplastische Kunststoffe, bekannt geworden, wie beispielsweise ein Ultraschallschweißen oder ein Laserschweißen. Selbstverständlich kann auch ein sogenanntes Montagespritzgussverfahren zur Fügung der mindestens beiden Kunststoffschalenteile 41, 42 vorgesehen werden.

Den Figuren 2A-2C lässt sich detailliert die Ausgestaltung der Oszillatoreinrichtung 2, insbesondere der Oszillationskammer 20, mit der Treibdüse 21 und der relativ zu der Treibdüse 21 gegenüberliegenden Ausbringdüse 22 entnehmen. In den dargestellten Figuren 2 ist die Ausbringdüse 22 in Form einer sich in Ausstoßrichtung des Öls aufweitenden Fächerdüse 221 ausgebildet, welche in der Oszillationsebene 30 des Ölstrahls sich fächerförmig aufweitet. Die Treibdüse 21 ist in den dargestellten Ausführungsformen als Punktdüse ausgebildet zur Abgabe eines konzentrierten flüssigen Ölstrahls in die Oszillationskammer 20. In der Oszillationskammer 20 sind mehrere geometrische Strukturen 23 ausgebildet, so dass in der Oszillationskammer 20 in der dargestellten Ausführungsform zwei in der Oszillationsebene 30 einander gegenüberliegende Steuerkanäle 24 ausgebildet werden. In der dargestellten Ausführungsform gemäß den Figuren 2 sind die beiden einander gegenüberliegenden Steuerkanäle 24 in der Oszillationsebene 30 spiegelsymmetrisch, insbesondere mit gleichen Durchflussquerschnitten und Verläufen, ausgebildet. Hierdurch wird eine gleichmäßige Oszillation des Ölstrahls erreicht. Es kann jedoch auch vorgesehen werden, insbesondere die dargestellten Kanäle 24 mit unterschiedlichen Durchflussquerschnitten auszubilden, so dass eine Oszillation des Ölstrahls in der Oszillationsebene 30 in den beiden Richtungen unterschiedlich stark ausgeprägt bzw. ausgebildet werden kann.

In den Figuren 2A-2C ist dargestellt, dass die Ölzuführleitung 1 und die Oszillatoreinrichtung 2 quer zu der Strömungsrichtung des Öls von dem Einlassende 11 zu der Ausbringdüse 22 als zweischaliges Kunststoffbauteil mit zwei Kunststoffschalenteilen 41, 42 ausgeführt ist, wobei die Figuren 2A und 2B lediglich das erste der beiden Kunststoffschalenteile 41 darstellen. In den Figuren 2 ist die ebene Fügeoberfläche 40 erkennbar, worüber das erste und zweite Kunststoffschalenbauteil 41, 42 miteinander fluiddicht verbunden bzw. miteinander gefügt werden kann. Zur Verdeutlichung ist in der Fig. 2C die Ölbenetzungsvorrichtung 10 umfassend die beiden Kunststoffschalenbauteile 41, 42 dargestellt, wobei im Bereich der Oszillationskammer 20 das zweite Kunststoffschalenteil 42 zur Verdeutlichung der inneren Strukturen und der Fügeoberfläche 40 teilweise weggeschnitten wurde.

Der Fig. 3 lässt sich wiederum eine perspektivische Ansicht der erfindungsgemäßen beispielhaften Ausführungsform der Ölbenetzungsvorrichtung 10 entnehmen, wobei in der Fig. 3 der oszillierende Ölstrahl 3 dargestellt ist, wobei dieser als Vielzahl von unmittelbar aufeinanderfolgenden Öltröpfchen dargestellt ist.

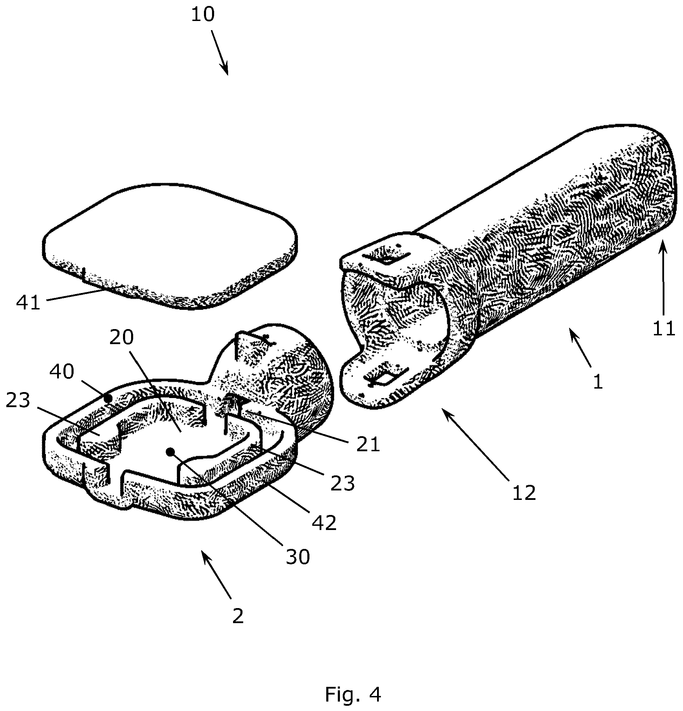

In der Fig. 4 ist eine perspektivische schematische Ansicht einer weiteren beispielhaften Ausführungsform der erfindungsgemäßen Ölbenetzungsvorrichtung 10 dargestellt. Die beispielhafte Ausführungsform gemäß Fig. 4 unterscheidet sich von den vorherigen Figuren darin, dass die Ölzuführleitung 1 ein dem Einlassende 11 gegenüberliegendes Auslassende 12 aufweist, wobei im Bereich des vorbezeichneten Auslassendes 12 die Oszillatoreinrichtung 2 an die Ölzuführleitung 1 fluiddicht ankoppelbar ausgeführt ist. Hierzu ist in der dargestellten Ausführungsform eine Fluidkupplung vorgesehen, welche sich über Rastelemente miteinander werkzeuglos verbinden und aneinander ankoppeln lässt. In der dargestellten Ausführungsform ist die Ölzuführleitung 1 einstückig, beispielsweise als Spritzgussteil, ausgebildet, wohingegen die Oszillatoreinrichtung 2 wiederum als zweiteiliges Schalenbauteil umfassend ein erstes Schalenteil 41 und ein zweites Schalenteil 42 ausgebildet ist mit einer ebenen Fügeoberfläche 40, worüber die beiden Kunststoffschalenteile 41 bzw. 42 der Oszillatoreinrichtung 2 sich miteinander fluiddicht verbinden bzw. fügen lassen.

## Patentansprüche

1. Ölbenetzungsvorrichtung (10) zur Schmierung von Kraftfahrzeugkomponenten, aufweisend:
- eine Ölzuführleitung (1) mit einem Einlassende (11) zur Ölzufuhr, sowie
- eine Oszillatoreinrichtung (2) zur Ausbringung eines oszillierenden Ölstrahls (3);
wobei die Oszillatoreinrichtung (2) eine Oszillationskammer (20) mit einer Treibdüse (21) und mit einer relativ zu der Treibdüse (21) stromabwärts gelegenen Ausbringdüse (22) ausgebildet ist;
wobei die Treibdüse (21) dazu ausgebildet ist, das über die Ölzuführleitung (1) zugeführte Öl als Treibstrahl in die Oszillationskammer (20) abzugeben;
wobei in der Oszillationskammer (20) geometrische Strukturen (23) zur Ausbildung von Wirbeln ausgebildet sind, wodurch der flüssige Treibstrahl bei Durchströmung der Oszillationskammer (20) in einer Ebene (30) in Oszillation versetzt wird; und
wobei die Ausbringdüse (22) zum Ausgeben des in der Ebene (30) oszillierenden Ölstrahls (3) aus der Oszillationskammer (20) ausgebildet ist.

2. Ölbenetzungsvorrichtung (10) nach Anspruch 1, wobei die Treibdüse (21) als Punktdüse zur Abgabe eines konzentrierten Ölstrahls in die Oszillationskammer (20) ausgebildet ist.

3. Ölbenetzungsvorrichtung (10) nach Anspruch 1 oder 2, wobei als geometrische Strukturen (23) in der Oszillationskammer (20) zumindest zwei in der Oszillationsebene (30) gegenüberliegende Steuerkanäle (24) ausgebildet sind.

4. Ölbenetzungsvorrichtung (10) nach einem der vorausgehenden Ansprüche, wobei die Ausbringdüse (22) in Form einer Fächerdüse (221) ausgebildet ist, welche in der Oszillationsebene (30) des Ölstrahls (3) fächerförmig aufgeweitet ist.

5. Ölbenetzungsvorrichtung (10) nach einem der vorausgehenden Ansprüche, wobei die Ölzuführleitung (1) und die Oszillatoreinrichtung (2) aus einem getriebeölbeständigen und bevorzugt glasfaserverstärkten Kunststoffmaterial ausgebildet sind.

6. Ölbenetzungsvorrichtung (10) nach einem der vorausgehenden Ansprüche, wobei die Ölzuführleitung (1) ein dem Einlassende (11) gegenüberliegendes Auslassende (12) aufweist, wobei im Bereich des Auslassendes (12) die Oszillatoreinrichtung (2) stoffschlüssig an der Ölzuführleitung (1) angeformt ist und wobei die Treibdüse (21) an dem Auslassende (12) der Ölzuführleitung (1) ausgebildet wird.

7. Ölbenetzungsvorrichtung (10) nach einem der Ansprüche 1 bis 5, wobei die Ölzuführleitung (1) ein dem Einlassende (11) gegenüberliegendes Auslassende (12) aufweist, wobei im Bereich des Auslassendes (12) die Oszillatoreinrichtung (2) an die Ölzuführleitung (1) fluiddicht ankoppelbar ausgeführt ist.

8. Ölbenetzungsvorrichtung (10) nach einem der vorausgehenden Ansprüche, wobei die Ölzuführleitung (1) und die Oszillatoreinrichtung (2) quer zu der Strömungsrichtung des Öls von dem Einlassende (11) zu der Ausbringdüse (22) als mindestens zweischaliges Spritzgussteil mit mindestens zwei Kunststoffschalenteilen (41, 42) ausgeführt werden.

9. Ölbenetzungsvorrichtung (10) nach Anspruch 8, wobei das mindestens zweischalige Kunststoffspritzgussteil mindestens eine ebene Fügeoberfläche (40) aufweist.

10. Ölbenetzungsvorrichtung (10) nach Anspruch 8 oder 9, wobei das mindestens eine erste Kunststoffschalenteil (41) aus einem lasertransparenten Kunststoffmaterial und wobei das mindestens eine zweite Kunststoffschalenteil (42) aus einem laserabsorbierenden Kunststoffmaterial ausgebildet wird.

11. Ölbenetzungsvorrichtung (10) nach einem der Ansprüche 8 bis 10, wobei die mindestens zwei Kunststoffschalenteile (41, 42) stoffschlüssig miteinander verbunden, bevorzugt miteinander stoffschlüssig gefügt sind.

12. Ölbenetzungsvorrichtung (10) nach einem der vorausgehenden Ansprüche, wobei die Ölzuführleitung (1) und die Oszillatoreinrichtung (2) entlang der Strömungsrichtung des Öls von dem Einlassende (11) zu der Ausbringdüse (22) als einstückiges Kunststoffspritzgussteil ausgeführt sind.

13. Ölbenetzungsvorrichtung (10) nach einem der vorausgehenden Ansprüche, wobei im Bereich des Einlassendes (11) der Ölzuführleitung (1) ein Schnellkupplungsanschluss (111) ausgebildet ist zur fluiddichten Ankopplung an ein ölführendes Bauteil.

14. Ölbenetzungsvorrichtung (10) nach einem der vorausgehenden Ansprüche, wobei im Bereich des Einlassendes (11) und/oder, wenn vorhanden, des Auslassendes (12), der Ölzuführleitung (1) ein Dichtungselement (14) angeordnet oder angeformt, bevorzugt ausgebildet, ist zur fluiddichten Ankopplung der Ölzuführleitung (1).

15. Ölbenetzungsvorrichtung (10) nach einem der vorausgehenden Ansprüche, wobei im Bereich der Ölzuführleitung (1) und/oder der Oszillatoreinrichtung (2) mindestens ein Befestigungselement (5), bevorzugt eine Schraubhülse (51), zur lasttragenden Verbindung der Ölbenetzungsvorrichtung (10) mit einer Kraftfahrzeugkomponente ausgebildet ist.

16. Schmierungsvorrichtung für Getriebekomponenten, bevorzugt eines elektrisch angetriebenen Fahrzeuges, aufweisend:
- mindestens eine Getriebekomponente eines Fahrzeuges;
- mindestens ein ölführendes Bauteil; sowie
- mindestens eine Ölbenetzungsvorrichtung (10) nach einem der vorausgehenden Ansprüche,
wobei das mindestens eine Einlassende (11) der mindestens einen Ölbenetzungsvorrichtung (10) mit dem mindestens einen ölführenden Bauteil verbunden ist zur Zufuhr von Öl in die mindestens eine Ölzuführleitung (1), und
wobei die mindestens eine Ausbringdüse (22) in Richtung der mindestens einen Getriebekomponente ausgerichtet ist zur Ausbringung eines oszillierenden Ölstrahls (3) auf die Getriebekomponente.

17. Getriebekomponente eines Fahrzeuges, bevorzugt eines Elektrofahrzeuges, aufweisend:
- mindestens ein ölführendes Bauteil; sowie
- mindestens eine Ölbenetzungsvorrichtung (10) nach einem der Ansprüche 1 bis 15,
wobei das mindestens eine Einlassende (11) der mindestens einen Ölbenetzungsvorrichtung (10) mit dem mindestens einen ölführenden Bauteil verbunden ist zur Zufuhr von Öl in die mindestens eine Ölzuführleitung (1), und
wobei die mindestens eine Ausbringdüse (22) in Richtung der mindestens einen Getriebekomponente ausgerichtet ist zur Ausbringung eines oszillierenden Ölstrahls (3) auf die Getriebekomponente.
